# DEMANDE DE BREVET EUROPEEN

(11) **EP 3 207 793 A1**
(43) Date de publication de la demande: **23.08.2017**
(21) Numéro de dépôt: 16156725.0
(22) Date de dépôt: 22.02.2016
(51) Int. Cl.: A01K 1/01

(54) **MACHINE A CURER LES BOX ET ENLEVER LE FUMIER**

(71) Demandeur: Godbillon, Pierre, 77300 Fountainebleau (FR)
(72) Inventeur: Godbillon, Pierre, 77300 Fountainebleau (FR)
(74) Mandataire: Cabinet Camus Lebkiri

(57) **Abrégé**

L'invention concerne un moyen mobile particulièrement destiné à l'enlèvement du fumier des box des chevaux, comportant:
- un caisson châssis mobile (10) monté sur roues, rigide, avec une ouverture avant en forme de pelle et ouvert à l'extrémité arrière, comprenant au moins un ensemble de hachage (9 ; 27) pour la coupe et le transfert des matières;
- une cuve à matières (23) amovible articulée sur le caisson châssis étant ouvrante et basculante ou un récepteur extérieur (39)
- des moyens solidaires du caisson châssis pour relever et guider le fumier vers l'entrée du dit caisson ;
- une canalisation orientable (24), solidaire du caisson châssis située après l'ensemble de hachage et transfert (9 ; 27) et du ventilateur (28) pour canaliser les matières vers la cuve (23) ou un récepteur extérieur (39);
- un déflecteur orientable (25) fixé à l'extrémité de la goulotte orientable (24) pour guider les matières vers la cuve à matière (23) ou un récepteur extérieur.

## Description

### DOMAINE TECHNIQUE DE L'INVENTION

La présente invention concerne un moyen mobile mécanique pour permettre notamment l'enlèvement du fumier de cheval, litière composée des déjections mélangées à de la paille ou des copeaux, qui doit être extrait régulièrement des écuries.

De nombreuses écuries comportent des bâtiments fermés. Le mode le plus courant de logement des chevaux est le box dans les centres équestres, les élevages, les centres d'entrainement des chevaux de sport ou de course. Les dimensions moyennes des box sont de 4 mètres par 4 mètres équipés d'une porte d'une largeur d'un mètre au minimum pour loger un seul cheval.

Les installations équestres comportent généralement de nombreux chevaux : les effectifs moyens d'équidés par installation sont de 38, des centres équestres avec des effectifs de 120 sont courants à proximité des grandes villes ou dans les installations d'entrainement de courses hippiques. La production de fumier par cheval est de l'ordre de 44 m3 par an pour une densité de 150 à 350 kg/m3, soit entre 6,6 et 15,4 tonnes par cheval et par an. La fréquence d'enlèvement complet du fumier d'un box est au minimum d'une fois par semaine, soit plus de 125 kg de matières par cheval par semaine.

Le fumier est usuellement extrait manuellement des box à l'aide d'une fourche et chargé sur une brouette pour ensuite être transporté vers une aire de stockage.

Les durées de stockage du fumier doivent être limitées à proximité des habitations pour répondre aux exigences des normes sanitaires et environnementales. De plus en plus, les débouchés traditionnels du fumier de cheval, comme les champignonnières, sont en train de se tarir. Le milieu chevalin est donc confronté à un excédent et doit faire face aux charges d'exploitation pour l'enlèvement du fumier des box, son stockage et son évacuation. Il est donc intéressant de faciliter l'enlèvement du fumier des box, le stockage et les manutentions.

Matière organique composante de la biomasse, le fumier de cheval est par ailleurs utilisé traditionnellement comme amendement organique dans la filière agricole. Il est également valorisé au travers de compost. Il est donc intéressant de favoriser les processus de décomposition et l'utilisation dans des filières de valorisation de la biomasse par un hachage des matières des litières dès l'enlèvement, disposition plus favorable à une utilisation comme combustible ou amendement organique.

### ARRIERE-PLAN TECHNOLOGIQUE DE L'INVENTION

Pour répondre au problème technique de l'enlèvement du fumier des box, on a proposé des petits chargeurs sur roues équipés de moteurs Diesel., Une telle solution est mal adaptée au problème posé parce qu'ils nécessitent des écuries conçues spécialement et qu'ils utilisent des puissances élevées de fonctionnement, ils sont en outre encombrants étant mus par des énergies Diesel, ils sont source d'émissions polluantes inadaptées dans des locaux fermés.

On a également proposé certains dispositifs spécialement conçus pour procéder à l'enlèvement tels que des aspirateurs très puissants mais ces dispositifs, parce qu'ils nécessitent des puissances de fonctionnement élevées, sont mal adaptés aux écuries fermées et aux problèmes à résoudre car ils sont encombrants, très bruyants et source d'émissions polluantes.

### DESCRIPTION GENERALE DE L'INVENTION

Un objet de la présente invention est de fournir un moyen mobile rapide pour mécaniser l'enlèvement du fumier des box et remédier aux inconvénients ci-dessus. Avantageusement, dans l'invention, on permet de diminuer le volume des matières dès le début de la collecte par hachage, supprimer les nuisances sonores et émissions polluantes, réduire le volume de stockage, faciliter les manutentions et le transport.

A cet effet selon l'invention, le moyen mobile pour l'enlèvement de matières des box des chevaux.
- un caisson châssis mobile monté sur roues ; ledit caisson étant rigide et formant châssis, avec une ouverture avant en forme de pelle et une forme coudée à l'extrémité arrière, comprenant au moins un ensemble de hachage et de transfert des matières et ventilateur placé après l'ensemble de hachage dit caisson pour le transfert des matières;
- une cuve à matières amovible articulée sur le caisson châssis étant ouvrante et basculante,
- des moyens solidaires du caisson châssis pour relever et guider le fumier vers l'entrée du dit caisson ;
- une canalisation orientable, solidaire du caisson châssis située après l'ensemble de hachage et du ventilateur pour canaliser les matières vers la cuve ou un récepteur extérieur;
- un déflecteur orientable fixé à l'extrémité de la canalisation orientable.

Le moyen mobile selon l'invention peut comporter, en plus des caractéristiques principales qui viennent d'être mentionnées dans le paragraphe précédent, une ou plusieurs caractéristiques supplémentaires parmi les suivantes:
- les moyens solidaires du caisson châssis comportent deux cônes à axes verticaux équipés de balais tournant en sens inverse l'un de l'autre.
- Le moyen mobile comporte une source d'énergie électrique stockée embarquée et une prise de raccordement d'une source d'énergie extérieure sur le dit châssis mobile pour délivrer la puissance nécessaire à assurer les déplacements, les mouvements de positionnement et d'entrainement des ensembles mécaniques du moyen mobile.
- une ou plusieurs batteries électriques rechargeables amovibles sont montées solidaires du moyen mobile.
- l'ensemble de hachage comporte un cylindre tournant équipé de lames boulonnées démontables.
- la canalisation orientable et le déflecteur assurent la tombée des matières dans la cuve.
- la canalisation orientable et le déflecteur assurent la tombée des matières dans un récepteur placé à proximité du moyen mobile.
- un logement ajusté est formé autour de l'ensemble de hachage dans le dit caisson pour créer une dépression à l'avant et un flux d'air à l'arrière.
- des moyens mettent en rotation l'ensemble de hachage et le ventilateur.
- le ventilateur formant accélérateur des matières dans le caisson est placé après l'ensemble de hachage.
- le moyen mobile est propulsé par une roue motrice et directrice

Les différentes caractéristiques supplémentaires du moyen mobile selon l'invention, dans la mesure où elles ne s'excluent pas mutuellement, sont combinées selon toutes les possibilités d'association pour aboutir à différents exemples de réalisation de l'invention.

De manière avantageuse, le moyen mobile selon l'invention peut présenter une ou plusieurs caractéristiques parmi les suivantes :
Un caisson châssis avec une entrée en forme de pelle à section décroissante à partir de l'avant, incliné vers le haut et coudé à l'arrière, monté sur roues, formant un chariot mobile comportant au moins deux roues pouvant être motrices placée à l'avant, et au moins un roue directrice placée à l'arrière, pouvant être motrice si les roues avant ne le sont pas.

Une cuve à fumier amovible en partie supérieure du chariot au-dessus du caisson châssis.

Des moyens pour relever et guider le fumier vers l'entrée du dit caisson.

Un ensemble de hachage et de transfert des matières comprenant avantageusement un rotor à lames logé dans le dit caisson, un ventilateur formant accélérateur des matières placé à l'arrière du dit rotor dans la partie coudée du caisson.

Un tube, formant une goulotte fermée avantageusement verticale, connecté au premier caisson, orientable sur un palier à axe vertical canalisant les matières vers le haut.

Un déflecteur adapté à l'extrémité de la goulotte canalisant les matières soit vers la dite cuve soit, par orientation, vers un autre récepteur, séparé du dit chariot.

Un ensemble d'avancement et de propulsion du chariot mobile connecté à la ou les roues motrices.

Un ensemble de mise en rotation du moyen de relevage et de guidage du fumier.

Un ensemble de mise en rotation autour de son axe du rotor de hachage et du ventilateur accélérateur.
Un frein d'immobilisation du rotor de hachage
Un moyen de direction du dit chariot.
Une ou plusieurs batteries électriques rechargeables amovibles.
Une prise électrique de raccordement à une source d'énergie extérieure
Un frein d'immobilisation placé sur la ou les roues motrices
Un pupitre de commande et d'indications de fonctionnement
On comprend que le moyen mobile selon l'invention est particulièrement bien adapté à l'enlèvement de fumier pour nettoyer les box dans les écuries de tous types : d'une part, il est mobile et permet une manoeuvre aisée dans l'espace du box et dans l'écurie, d'autre part,. comme le fumier est relevé et guidé à l'avant, l'avancement et la poussée du chariot permet l'acheminement des matières vers l'ensemble de hachage puis le transfert vers la cuve des matières. En outre, du fait de la goulotte orientable et du déflecteur à son extrémité, il est possible, soit de vider la cuve vers un autre récepteur, indépendant du moyen mobile, soit de transférer les matières vers un autre récepteur.

Le moyen mobile permet en outre de transporter les matières stockées dans la cuve vers un lieu de stockage. Avantageusement l'énergie embarquée ou extérieure pour alimenter les actionneurs des mouvements mécaniques du moyen mobile est électrique.

Avantageusement, le moyen de relevage et de guidage du fumier est constitué de deux cônes munis de balais circulaires montés sur des axes verticaux à l'extrémité des branches du châssis cadre et tournant dans des sens opposés.

### BREVE DESCRIPTION DES FIGURES

D'autres caractéristiques et avantages de la présente invention apparaitront mieux à la lecture de la description qui suit d'un mode de réalisation de l'invention donné à titre d'exemple non limitatif. La description se réfère aux figures annexées sur lesquelles :
La figure 1 est une vue générale simplifiée du moyen d'enlèvement du fumier.
La figure 2 est une vue en coupe du moyen de relevage et de guidage des matières et de l'ensemble de hachage et de transfert aéraulique des matières hachées.
La figure 3 est une vue avant du moyen mobile et de la goulotte orientée vers un récepteur indépendant, séparé du moyen mobile.
La figure 4 est une vue partielle de dessus du moyen mobile et de sa direction
La figure 5 est une vue du poste de commande du moyen mobile

### DESCRIPTION DES FORMES DE REALISATION PREFEREES DE L'INVENTION

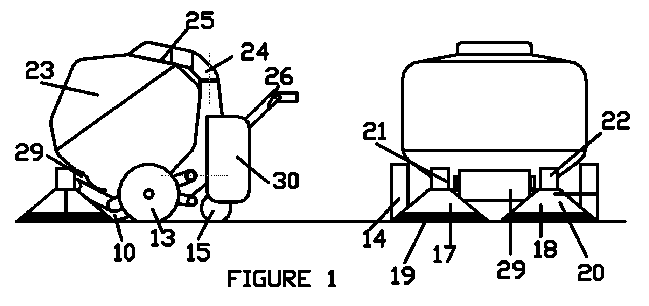

En se référant tout d'abord à la figure 1, il est représenté l'ensemble du moyen mobile d'enlèvement du fumier des box. Le moyen dispose d'abord d'un caisson châssis mobile (10), dont la partie avant est en forme de pelle et la partie arrière est coudée vers le haut, de préférence la section est rectangulaire à l'avant pour terminer en forme cylindrique vers le haut à l'arrière du moyen mobile.

Dans l'exemple considéré, le moyen dispose de deux roues porteuses (13) et (14) et d'un ensemble d'une roue motrice et directrice (15). De préférence la roue directrice est placée à l'arrière du moyen mobile pour favoriser la manoeuvrabilité à l'intérieur du box. Le moyen dispose également d'une cuve (23), de moyens de guidage des matières (19), (20) et (29), d'un timon de direction (26), de batteries (30), d'une canalisation (24) et d'un déflecteur (25).

Sur la figure 1 est représenté un exemple de réalisation avantageux du moyen de relevage et de guidage des matières vers l'ensemble de broyage. A l'avant du caisson, sur deux extrémités liées rigidement au châssis caisson, sont fixés deux cônes (17) et (18), tournant autour d'axes verticaux et entraînés en sens inverse par des motoréducteurs (21) et (22). La disposition de ces cônes tournants permet de relever le fumier du sol et, en combinaison avec l'avancement du chariot, de le canaliser vers l'entrée du caisson et le hacheur. Des balais circulaires (19) et (20) sont disposés sous les cônes (17) et (18). A l'entrée du dit caisson, en partie supérieure, est fixé, sur deux paliers tournants, un rouleau horizontal (29) de guidage haut du fumier vers l'ensemble de hâchage. Le rouleau est entraîné par un système poulies et courroie.

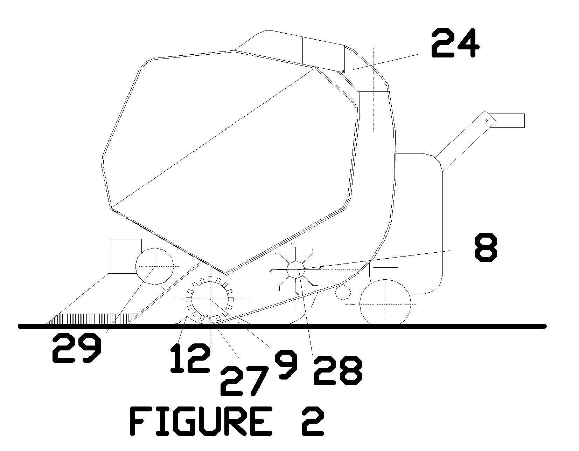

La figure 2 représente l'ensemble de hachage et de transfert des matières. Dans le caisson (10), un hacheur (27) est monté sur un axe de rotation horizontal. Dans l'exemple considéré, le hacheur(27) est constitué d'un cylindre et de lames fixées par boulons au cylindre. Ces lames sont ajustées dans le caisson de manière à créer une dépression à l'avant et un flux d'air vers l'arrière du caisson. Le hacheur (27) coupe les matières du fumier contre le taquet (12) et les propulse vers l'arrière du caisson vers un ventilateur(28) formant accélérateur. Le transport des matières se fait par projection par le hacheur et déplacement avec le flux d'air créé par le ventilateur vers le haut de la canalisation (24).

L'ensemble hacheur et transfert des matières peut être réalisé en un seul appareil. L'axe horizontal (9) du broyeur (27) est entraîné par une poulie et une courroie par un motoréducteur. Un frein d'immobilisation est placé sur l'axe du hacheur. L'axe horizontal (8) du ventilateur (28) est entrainé par une poulie et une courroie, couplées avec le motoréducteur d'entrainement du hacheur. Les vitesses des hacheurs et ventilateur sont adaptées par les diamètres des poulies.

On peut utiliser d'autres moyens de mise en rotation tels que roues dentées ou entrainement direct par motoréducteur.

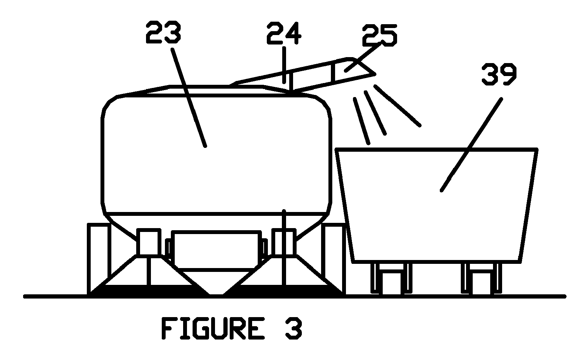

La figure 3 représente un mode préféré de réalisation de transfert et de réception des matières. Au-dessus du caisson est montée une cuve (23). Les matières transportées dans la canalisation (24) sont guidées par un déflecteur orientable (25) placé à l'extrémité de la canalisation (24). Les matières dans la goulotte peuvent être orientées vers le haut de la cuve (23) pour y être déversées. Un autre mode de déversement des matières peut être utilisé en orientant la goulotte (24) avec le déflecteur (25) vers un récepteur (39) placé à proximité de manière à y recevoir les matières.

Lorsque la cuve du chariot est pleine, elle peut être vidée sur le lieu de stockage pour y déverser le fumier en ouvrant la partie supérieure de la cuve puis en la basculant vers le haut et l'avant.

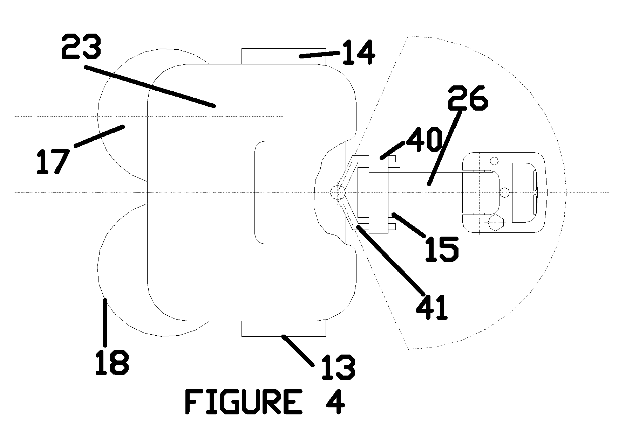

La figure 4 montre un exemple de l'ensemble de translation et de direction. Sur cette figure on a représenté la roue motrice et directrice (15), qui est fixée rigidement à la partie (40) solidaire du timon, (26) et la partie fixe en rotation (41) liée au châssis. Le timon(26) permet l'orientation relative des deux pièces. On obtient ainsi une possibilité de rotation dans un sens et dans un autre par déplacement angulaire du timon de manoeuvre (26). On peut utiliser d'autres moyens de rotation tels que pignons, roues dentées etc...

Le timon (26) est orientable autour d'un axe horizontal dans un plan vertical d'un angle de 45°avec une position de rappel verticale.

L'ensemble moteur est constitué d'un moteur électrique, accouplé à un réducteur, de telle sorte que l'axe vertical du moteur et l'axe de la roue fassent un angle de 90°, par l'intermédiaire d'un renvoi d'angle. La roue est entrainée par l'arbre de sortie du réducteur.

Le réducteur est fixé solidement sur la partie (40).

Un frein d'immobilisation est monté sur le corps du réducteur avec un disque solidaire de l'arbre de sortie lié à la roue.

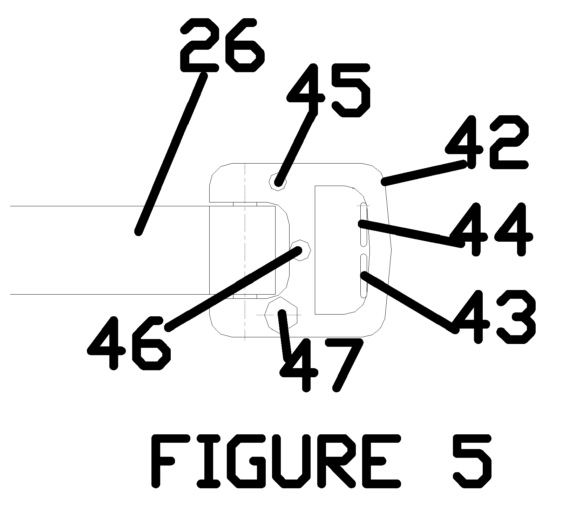

La figure 5 montre plus en détails la commande du moyen mobile. ; Sur cette figure est représentée l'extrémité du timon, qui supporte la poignée de direction (42), sur laquelle sont articulés deux leviers (43) et (44) qui autorisent la mise en fonctionnement du moyen par l'intermédiaire de contacteurs électriques. Ce dispositif ne peut être actif que lorsque l'opérateur a les deux mains en même temps sur la poignée et, dès lors que l'opérateur lâche cette poignée, le moyen mobile est immobilisé. Le pupitre comprend en outre une clé de mise sous tension du moyen (45) et d'avancement avant ou arrière, un arrêt coup de poing du moyen (46) et un indicateur de charge (47) de la ou des batteries.

Le moyen mobile selon l'invention est particulièrement destiné au hachage et à l'enlèvement des litières ou fumiers pour le nettoyage des box dans les écuries à chevaux.

## Revendications

1. Moyen mobile pour l'enlèvement de matières des box des chevaux, **caractérisé en ce qu'**il comprend :
- Un caisson châssis mobile (10) monté sur roues ;
- Le dit caisson étant rigide, avec une ouverture avant en forme de pelle et ouvert à l'extrémité arrière, comprenant au moins un ensemble de hachage (9 ; 27) pour la coupe et le transfert des matières;
- Une cuve à matières (23) amovible articulée sur le caisson châssis étant ouvrante et basculante ou séparée
- Des moyens solidaires du caisson châssis pour relever et guider le fumier vers l'entrée du dit caisson ;
- Une canalisation orientable (24), solidaire du caisson châssis située après l'ensemble de hachage et transfert (9 ; 27) et du ventilateur (28) pour canaliser les matières vers la cuve (23) ou un récepteur extérieur;
- Un déflecteur orientable (25) fixé à l'extrémité de la goulotte orientable (24) pour guider les matières vers la cuve à matière (23) ou un récepteur extérieur.

2. Moyen mobile selon la revendication 1 caractérisé en ce en ce que le ventilateur formant accélérateur des matières est placé après le dit ensemble de hachage.

3. Moyen mobile selon l'une quelconque des revendications précédentes **caractérisé en ce que** les moyens solidaires du caisson châssis comportent deux cônes à axes verticaux (17 ; 18) équipés de balais tournant (19 ; 20) en sens inverse l'un de l'autre.

4. Moyen mobile selon l'une quelconque des revendications précédentes **caractérisé en ce qu'**il comporte une source d'énergie électrique stockée embarquée (30) et une prise de raccordement d'une source d'énergie extérieure sur le dit châssis mobile pour délivrer la puissance nécessaire à assurer les déplacements, les mouvements de positionnement et d'entrainement des ensembles mécaniques du moyen mobile.

5. Moyen mobile selon l'une quelconque des revendications précédentes **caractérisé en ce que** une ou plusieurs batteries électriques rechargeables amovibles (30) sont montées solidaires du moyen mobile.

6. Moyen mobile selon l'une quelconque des revendications précédentes **caractérisé en ce que** l'ensemble de hachage (9 ; 27) comporte un cylindre tournant (9) équipé de lames boulonnées démontables.

7. Moyen mobile selon l'une quelconque des revendications précédentes **caractérisé en ce que** la canalisation orientable (24) et le déflecteur (25) assurent la tombée des matières dans la cuve.

8. Moyen mobile selon l'une quelconque des revendications précédente **caractérisé en ce que** la canalisation orientable (24)et le déflecteur (25) assurent la tombée des matières dans un récepteur (39) placé à proximité du moyen mobile.

9. Moyen mobile selon l'une quelconque des revendications précédentes **caractérisé en ce qu'**un logement ajusté (12) est formé autour de l'ensemble de hachage (9) dans le dit caisson pour créer une dépression à l'avant et un flux d'air à l'arrière.

10. Moyen mobile selon l'une quelconque des revendications précédentes **caractérisé en ce que** le moyen mobile est propulsé par une roue motrice et directrice (15).
